# EUROPEAN PATENT APPLICATION

(11) **EP 1 746 800 A2**
(43) Date of publication of application: **24.01.2007**
(21) Application number: 06101464.3
(22) Date of filing: 09.02.2006
(51) Int. Cl.: H04L 29/06

(54) **Data transmitting and receiving system, data processing apparatus, and encoding communication method**

(30) Priority: 19.07.2005 JP 2005208433
(71) Applicant: Konica Minolta Business Corporation, Inc., Chiyoda-ku Tokyo, Tokyo 100-0005 (JP)
(72) Inventor: Suzue, Tadashi, 192-8505, Tokyo (JP)
(74) Representative: Gille Hrabal Struck Neidlein Prop Roos

(57) **Abstract**

A data processing apparatus, comprising: an encoding unit to encode data to be transmitted, produce header information including identification information for specifying a key enabling decoding the encoded data, encode the produced header information by using a key of a transmission destination, and add the encoded header information to the data to be transmitted to produce header-added encoded data; and a transmission unit to transmit the header-added encoded data encoded by the encoding unit to a data processing apparatus of a transmission destination through a communication network.

## Description

### BACKGROUND OF THE INVENTION

### Field of the Invention

The present invention relates to a data transmitting and receiving system, a data processing apparatus and an encoding communication method of performing encoding communication.

### Description of Related Art

In recent years, various encoding techniques for protecting data at the time of performing a transmission and a reception of data through a communication network have been developed. For example, Patent Document 1 (JP-Tokukai-2000-358022A) discloses an encoding communication system provided with a storage unit for storing an encoding key used at the time of encoding or decoding data and identification information specifying the encoding key uniquely in the sate of being associated with each other, and a key determination unit for determining an encoding key used for encoding by a transmitting station and an encoding key used for decoding by a receiving station by giving and receiving identification information stored in the storage unit. Moreover, for example, Patent Document 2 (JP-Tokukai-Hei-11-65442A) discloses a technique of temporarily copying a formal header from a plaintext message before being encoded, adding the copied formal header to the end of the plaintext message, performing the encoding of the plaintext message and the formal header added to the plaintext message using feedback, and adding an un-encoded formal header to the top of the encoded message.

By the way, also in tandem printing, the transmission and the reception of data are performed by encoding communication for securing security of image data. In the tandem printing, a plurality of image forming apparatus is connected with one another through a communication network; image data is transferred from an image forming apparatus of a parent machine to an image forming apparatus of a child machine; and a printing job is performed by being allotted to a plurality of image forming apparatus.

In this case, although the transmission of the image data using a public key system would make the management of the key for encoding and decoding easy, the processing of the public key system is heavier than that of the secret key system, and the processing of the public keys system takes a longer time than that of the secret key system. Consequently, these respects exert a harmful influence on the speeding up of communication. On the other hand, by the secret key system, in case of performing the transmission and the reception of data among a plurality of apparatus, a plurality of secret keys of an own apparatus and the other apparatus must be managed. Consequently, the secret key system has a problem in which the management becomes complicated as the number of image forming apparatus increases. Moreover, because the secret keys must be changed every transmission destination while the encoding processing is performed to the data having a large data amount such as image data, the secret key system has another problem in which the secret key system takes a longer time for processing as the data transmission destinations increase, although the secret key system is faster than the public key system.

According to the technique disclosed in the Patent Document 1, because a plurality of secret keys is stored in the state of being associated with the identification information of an encoding apparatus, a troublesome key changing procedure can be omitted, and the management of the keys becomes easy. However, the technique cannot solve the problem of the processing time required at the time of encoding and transmitting data to a plurality of transmission destinations. Moreover, although the alterations of data can be prevented using the formal header according to the technique disclosed in the Patent Document 2, the problem of the processing time required at the time of encoding and transmitting data to a plurality of transmission destinations cannot be solved similarly to the technique disclosed in the Patent Document 1.

### SUMMARY OF THE INVENTION

It is an object of the present invention to speed up a processing time if encoding and transmitting data to a plurality of transmission destinations.

In accordance with a first aspect of the present invention, a data transmitting and receiving system comprising:
a plurality of data processing apparatus capable of being connected to one another through a communication network, a key used for at least one of data encoding and data decoding is jointly owned by a transmission source and a transmission destination of the data in the data transmitting and receiving system,
wherein each of the plurality of data processing apparatus includes
an encoding unit to encode data to be transmitted, produce header information including identification information for specifying the key enabling decoding the encoded data, encode the produced header information by using the key of a transmission destination, and add the encoded header information to the data to be transmitted to produce header-added encoded data,
a transmission unit to transmit the header-added encoded data encoded by the encoding unit to a data processing apparatus of the transmission destination through the communication network,
a reception unit to receive the header-added encoded data transmitted from another data processing apparatus through the communication network, and
a decoding unit to decode the header information of the header-added encoded data received from the other data processing apparatus by using a key of a transmission destination in the other data processing apparatus, specify a key to be used for decoding of the received data based on the identification information included in the decoded header information, and decode the received data by using the specified key.

In accordance with a second aspect of the invention, a data processing apparatus comprises:
an encoding unit to encode data to be transmitted, produce header information including identification information for specifying a key enabling decoding the encoded data, encode the produced header information by using a key of a transmission destination, and add the encoded header information to the data to be transmitted to produce header-added encoded data; and
a transmission unit to transmit the header-added encoded data encoded by the encoding unit to a data processing apparatus of a transmission destination through a communication network.

In accordance with a third aspect of the invention, a data processing apparatus comprises:
a reception unit to receive header-added encoded data transmitted from another data processing apparatus through a communication network; and
a decoding unit to decode header information of the header-added encoded data received from the other data processing apparatus by using a key of a transmission destination in the other data processing apparatus, specify a key to be used for the decoding of the received data based on identification information included in the decoded header information, and decode the received data by using the specified key.

In accordance with a fourth aspect of the invention, an encoding communication method in a data transmitting and receiving system comprising a plurality of data processing apparatus capable of being connected to one another through a communication network, in which a key used for at least one of data encoding and data decoding is jointly owned by a transmission source and a transmission destination of the data, the method comprising the steps of:
in the data processing apparatus of the data transmission source, encoding the data to be transmitted, producing header information including identification information for specifying a key enabling the decoding of the encoded data, encoding the produced header information using a key of a transmission destination, adding the encoded header information to the data to be transmitted to produce header-added encoded data, and transmitting the encoded header-added encoded data to the data processing apparatus of the transmission destination through the communication network; and
in the data transmission apparatus of the transmission destination, receiving header-added encoded data transmitted from another data processing apparatus through the communication network, decoding the header information of the header-added encoded data received from the other data processing apparatus using a key of the transmission destination of the other data processing apparatus, specifying a key to be used for the decoding of the received data based on the identification information included in the decoded header information, and decoding the received data using the specified key.

### BRIEF DESCRIPTION OF THE DRAWINGS

The present invention will become more fully understood from the detailed description given hereinbelow and the accompanying drawings which are given by way of illustration only, and thus are not intended as a definition of the limits of the present invention, and wherein:
FIG. 1 is a conceptual diagram showing the whole configuration of an image forming system 100 in an embodiment according to the present invention;
FIG. 2 is a block diagram showing the functional configuration of an image forming apparatus 1;
FIG. 3 is a diagram showing an example of data storage in a secret key management table 171;
FIG. 4 is a diagram showing the processing sequence of a tandem printing operation A executed in the image forming system 100;
FIG. 5 is a diagram showing the transmission and the reception of data among tasks on the parent machine side of the tandem printing operation A;
FIG. 6 is a diagram showing the transmission and the reception of data among tasks on the child machine side of the tandem printing operation A;
FIG. 7 is a flowchart showing encoding processing in tandem printing operations A and B;
FIG. 8 is a diagram showing an example of data configuration of a fixed length header;
FIG. 9A is a diagram schematically showing the encoding of image data by the encoding processing of FIG. 7, and FIG. 9B is a diagram schematically showing the decoding of image data by decoding processing of FIG. 10;
FIG. 10 is a flowchart showing the decoding processing in the tandem printing operations A and B; and
FIG. 11 is a diagram showing the processing sequence of the tandem printing operation B executed in the image forming system 100.

### DETAILED DESCRIPTION OF THE PREFERRED EMBODIMENTS

In the following, while the attached drawings are referred to, the preferred embodiments in which the data processing apparatus of the present invention is applied to the image forming apparatus 1 and the data transmitting and receiving system of the present invention is applied to the image forming system 100 are described.

### (First Embodiment)

First, the configuration thereof is described.

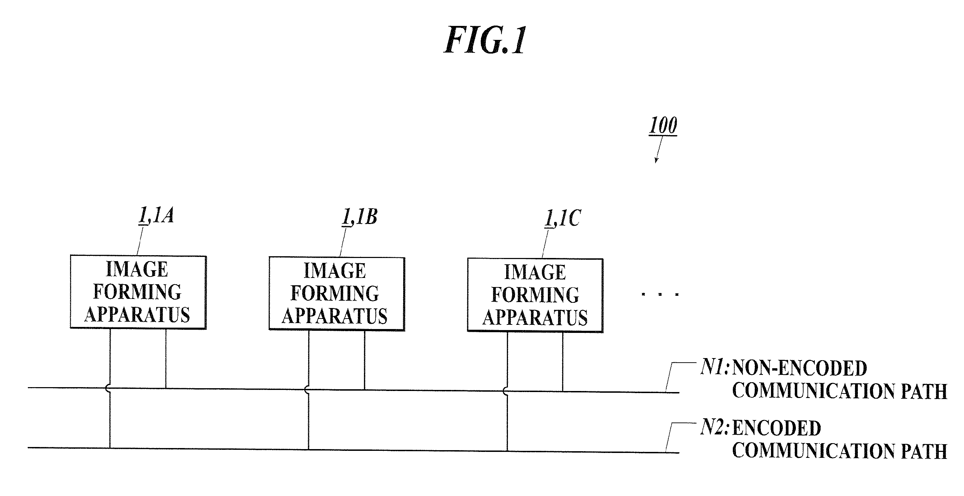

FIG. 1 is a conceptual diagram showing the whole configuration of the image forming system 100. The image forming system 100 is a system comprising a plurality of image forming apparatus which are connected to one another through a communication network such as a local area network (LAN) in order to perform a tandem operation of performing a printing job by sharing it among a plurality of image forming apparatus. As shown in FIG. 1, in the image forming system 100, a plurality of image forming apparatus 1 are connected to one another through communication paths N1 and N2 in the state capable of transmitting and receiving data mutually.

The communication paths N1 and N2 are network segments different from each other. The communication path N1 is a non-encoded communication path, and the communication path N2 is an encoded communication path, through which, for example, the data encoded based on Secure Socket Layer (SSL) or the like is transmitted and received. Incidentally, the communication paths N1 and N2 may be the same communication networks.

Incidentally, although an example of connecting three image forming apparatus 1 (1A, 1B and 1C) is illustrated here, the number of the image forming apparatus 1 is not especially limited.

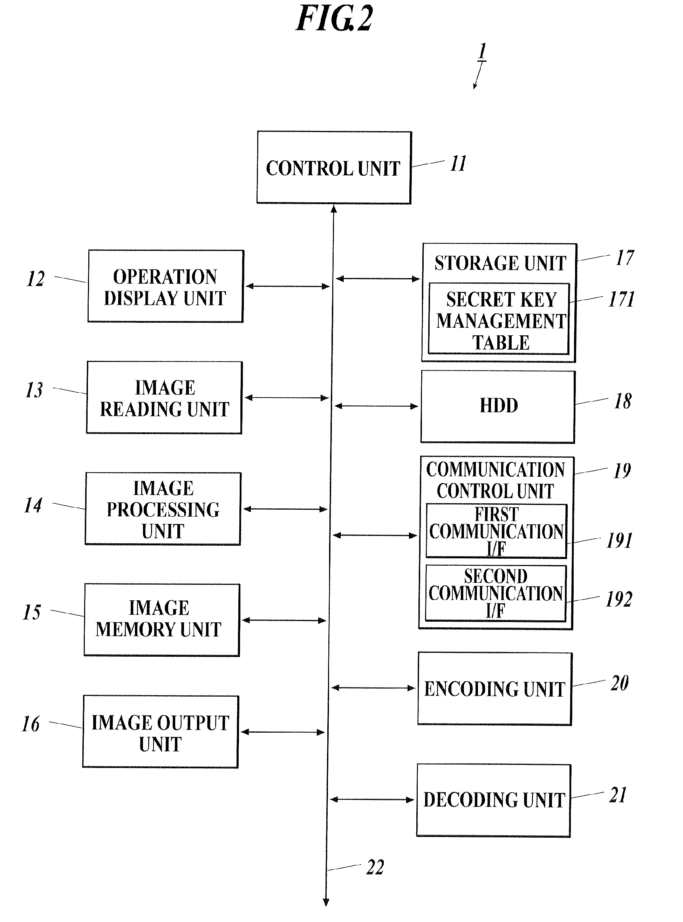

FIG. 2 is a block diagram showing the functional configuration of the image forming apparatus 1 (1A, 1B or 1C). The image forming apparatus 1, as shown in FIG. 2, comprises a control unit 11, an operation display unit 12, an image reading unit 13, an image processing unit 14, an image memory unit 15, an image output unit 16, a storage unit 17, a HDD 18, a communication control unit 19, an encoding unit 20, a decoding unit 21 and the like. Each unit is connected to one another through a bus 22.

The control unit 11 comprises a central processing unit (CPU), a random access memory (RAM) and the like. The CPU of the control unit 11 reads a system program stored in the storage unit 17, and develops the read system program in a work area formed in the RAM to control each unit in conformity with the system program. Moreover, the CPU of the control unit 11 reads various processing programs and various application programs which are stored in the storage unit 17, and develops the read programs in the work area to execute various kinds of processing.

The operation display unit 12 comprises a liquid crystal display (LCD). The operation display unit performs displays of various manual operation buttons, the state of the apparatus, the operating conditions of each function, and the like on a display screen in conformity with the instruction of a display signal input from the control unit 11. Moreover, the surface of the display screen of the LCD is covered by a pressure sensitive (resistance film pressure sensitive) touch panel comprising transparent electrodes arranged in a grid. The touch panel detects X-Y coordinates of a power point depressed by a finger, a touch pen or the like as a voltage value, and outputs the detected positional signal to the control unit 11 as a manipulated signal. Moreover, the operation display unit 12 is equipped with various manual operation buttons such as numeral buttons and a start button, and outputs the manipulated signal by a button operation to the control unit 11.

The image reading unit 13 comprises a scanner arranged under contact glass, on which an original is placed, and reads the image of the original. The scanner comprises a light source, a charge coupled device (CCD) and the like. The scanner reads the image of the original by imaging the reflected light of the light radiated from the light source to the original and having scanned the original, and by performing the photoelectric conversion of the reflected light. Then, the scanner converts the read image into digital image data by an A/D converter to output the converted digital image data to the image processing unit 14.

The image processing unit 14 performs image processing, such as spatial filter processing, expansion/reduction processing, rotation processing and tone correction processing, to the image data input from the image reading unit 13.

The image memory unit 15 comprises an image memory comprising a dynamic random access memory (DRAM) or the like, and a compressing expanding IC. The image memory unit 15 compresses the image data input from the image processing unit 14 to store the compressed image data in the image memory based on the control from the control unit 11. Moreover, the image memory unit 15 expands the image data stored in the image memory based on the control from the control unit 11.

The image output unit 16 is a printer engine including a conveyance apparatus of recording paper, a photosensitive drum, an electrification apparatus, a laser unit, a development apparatus, a transfer and separation apparatus, a cleaning apparatus and fixing apparatus. The image output unit 16 forms an image corresponding to the image data on a sheet of recording paper by an electrophotography process to output the image.

The storage unit 17 comprises a nonvolatile semiconductor memory, and previously stores a system program dealing with the image forming apparatus 1, various kinds of processing program including the programs for executing the processing of a parent machine and a child machine of a tandem printing operation A, which will be described later, various application programs, various kinds of data used by these programs, and the like.

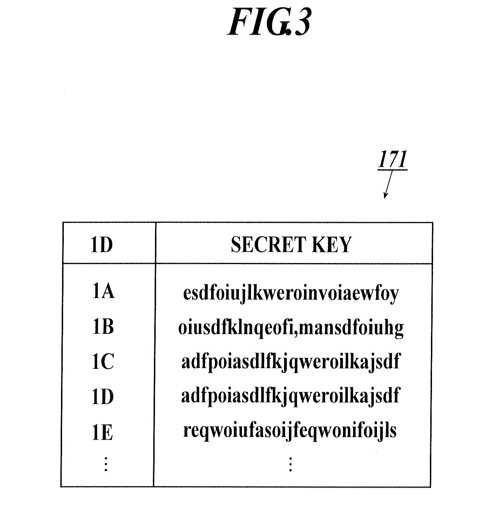

Moreover, the storage unit 17 has the secret key management table 171 as a storage unit. An example of data storage of the secret key management table 171 is shown in FIG. 3. The secret key management table 171 is a management table storing secret keys shared by the image forming apparatus 1 (1A, 1B and 1C), which perform transmission and reception of image data through the communication path N1 and realize the tandem printing function. In the present embodiment, it is supposed that the secret keys of the image forming apparatus 1A, 1B and 1C are shared by the image forming apparatus 1A, 1B and 1C. As shown in FIG. 3, the secret key management table 171 stores secret key IDs and secret keys in the state of being associated with each other in order to specify the secret key of each of the image forming apparatus 1A, 1B and 1C uniquely. The secret key ID of each image forming apparatus 1 is the apparatus ID of each image forming apparatus 1 in the present embodiment.

The secret keys made to be shared by the secret key management table 171 are ones mutually exchanged through the communication path N2, which is an encoded communication path. By the exchanges of the secret keys through the encoded communication path, the exchanges of the secret keys can be performed safely.

The hard disk (HDD) 18 saves image data.

The communication control unit 19 has one or more communication I/Fs, hereupon a first communication I/F 191 and a second communication I/F 192. The first communication I/F 191 realizes a transmission unit and reception unit, and comprises a LAN adapter and the like. The first communication I/F 191 performs the transmission and the reception of image data with the other image forming apparatus connected through the communication path N1, which is the non-encoded communication path. The second communication I/F 192 comprises a LAN adapter, an encoder/decoder, which performs encoding/decoding of data based on protocols such as SSL, and the like. The second communication I/F 192 performs the transmission and the reception of job data, secret keys and the like with the other image forming apparatus 1 connected through the communication path N2, which is the encoded communication path.

The encoding unit 20 performs encoding processing to image data based on an instruction from the control unit 11. The decoding unit 21 performs decoding processing to encoded image data. In the present embodiment, the encoding unit 20 and the decoding unit 21 are realized by the software processing by the cooperation of the CPU of the control unit 11, the encoding processing program and the decoding processing program, which are stored in the storage unit 17. Incidentally, the configuration of realizing the functions of the encoding processing program and the decoding processing program by the hardware of the exclusive use which operates under the control of the CPU of the control unit 11 may be adopted.

Next, the operation of the present embodiment is described.

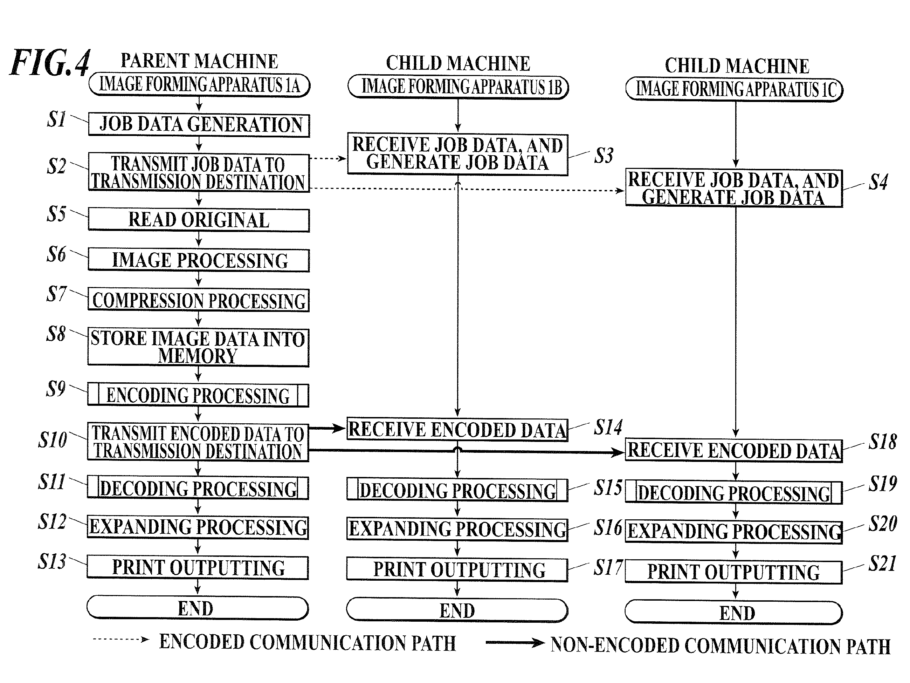

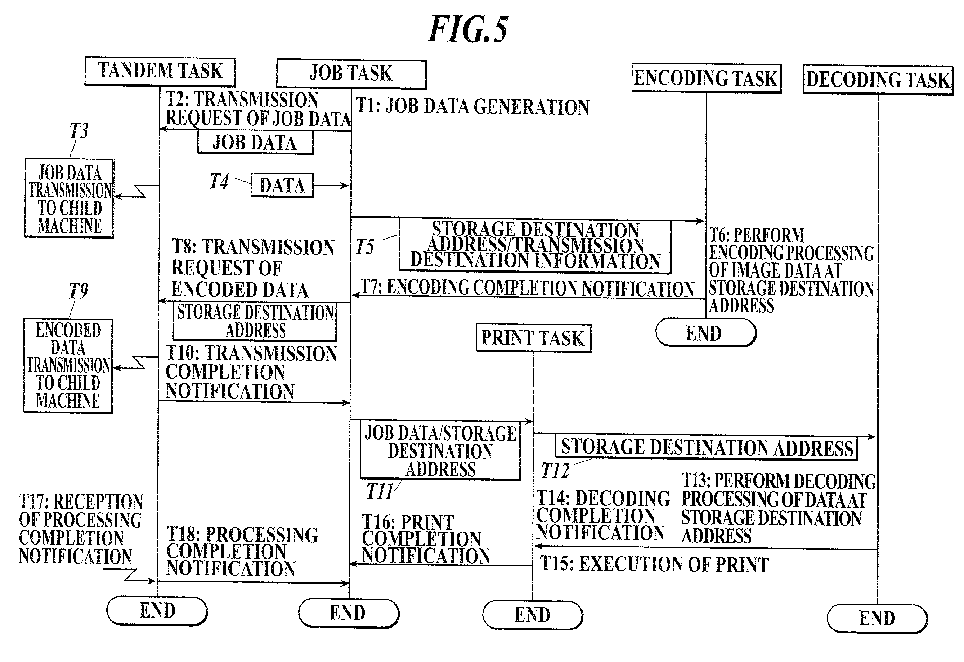

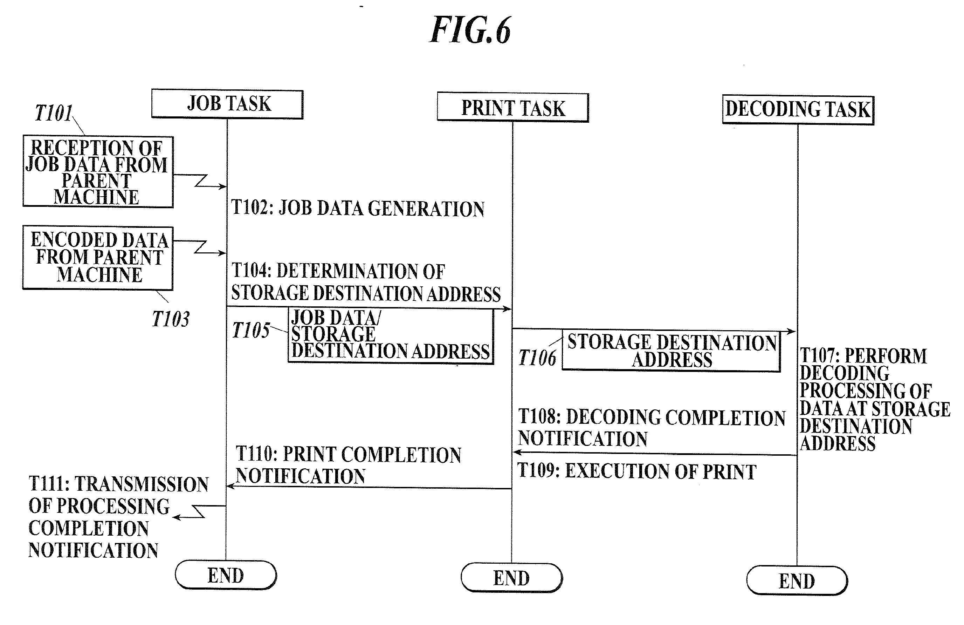

FIG. 4 is a diagram showing the processing sequence of a tandem printing operation (tandem printing operation A) of the processing of a print operation shared by a plurality of image forming apparatus 1 of the image forming system 100. The operation of the parent machine side in FIG. 4 is, as minutely shown in FIG. 5, executed by mutual data input and output of a job task, a tandem task, an encoding task, a decoding task, a print task and the like. Moreover, the operation of a child machine side shown in FIG. 4 is, as minutely shown in FIG. 6, executed by mutual input and output of a plurality of tasks such as a job task, a print task and a decoding.

Here, in the tandem printing operation, any one image forming apparatus 1 becomes the parent machine, and the other one or more image forming apparatus 1 become the child machines. The image forming apparatus 1 of the parent machine reads an original and performs image processing of the read image of the original. Then, the image forming apparatus prints the image data by itself, and transfers the image data to the image forming apparatus 1 of the child machines which share the print. The image forming apparatus 1 of the child machines print the transferred image data in conformity with the instruction from the image forming apparatus 1 of the parent machine. Hereinafter, FIGS. 4, 5 and 6 are referred to while the processing sequence at the time of setting the image forming apparatus 1A as the parent machine and setting the image forming apparatus 1B and 1C to the child machines is described.

First, in the image forming apparatus 1A, job data is generated based on the input (FIG. 4: Step S1) when a tandem printing mode is specified from the operation display unit 12, and the number of the groups of printing copies, the setting of various operations and the like are inputted. The generation of the job data is performed by the job task (FIG. 5: T1). The job data is data comprising a job ID for specifying a job, the number of printing sheets, the setting of various operations, storage places of image data, and the like.

When the job data is generated in the image forming apparatus 1A, the generated job data is transmitted from the second communication I/F 192 of the communication control unit 19 to the image forming apparatus 1B and 1C through the communication path N2, which is the encoded communication path (FIG. 4: Step S2). The processing at Step S2 is preformed by outputting the job data and a transmission request of the job data from the job task to the tandem task (FIG. 5: T2), and by transmitting the job data to the image forming apparatus 1B and 1C through the second communication I/F 192 of the communication control unit 19 (FIG. 5: T3).

In the image forming apparatus 1B and 1C, when the job data from the image forming apparatus 1A is received through the second communication I/F 192 of the communication control unit 19, job data in their own image forming apparatus is generated based on the received job data (FIG. 4: Steps. S3 and S4). In concrete terms, the received job data is input into the job task (FIG. 6: T101), and job data of the own image forming apparatus is generated based on the job data of the parent machine (FIG. 6: T102).

On the other hand, in the image forming apparatus 1A, the image reading unit 13 reads the image of an original to obtain image data (FIG. 4: Step S5), and the image processing unit 14 performs various kinds of image processing to the obtained image data (FIG. 4: Step S6). The image data having been processed by the image processing is performed the compressing processing by the compressing expanding IC of the image memory unit 15 (FIG. 4: Step S7), and is stored in the image memory (FIG. 4: Step S8). The processing of Step S5 is executed by the control of the image reading unit 13 by the job task, and the image data obtained from the image reading unit 13 is output to the job task (FIG. 5: T4). When the image data is input, the job task outputs the image data to the image processing unit 14, and makes the image processing unit 14 executes the image processing of the image data. Then, the job task makes the image memory unit 15 store the image data having received the image processing in a free space of the image memory. At the time of the memory storage, the attribute information of the image data to be stored (for example, an image ID, an image file name, an image data size, a generation date and time, and the like) is together generated, and is stored as an image information header.

When the image data is stored in the image memory, the encoding unit 20 performs the encoding processing of the image data in the image memory (Step S9). The processing of Step S9 is performed by the job task and the encoding task. In the job task, the storage destination address and the transmission destination information (hereupon, the apparatus ID's of the image forming apparatus 1B and 1C) of the image data in the image memory are output to the encoding task (FIG. 5: T5). In the encoding task (FIG. 5: T6), the encoding processing of the image data stored at the input storage destination address is executed. The encoding task is the processing unit in the encoding unit 20.

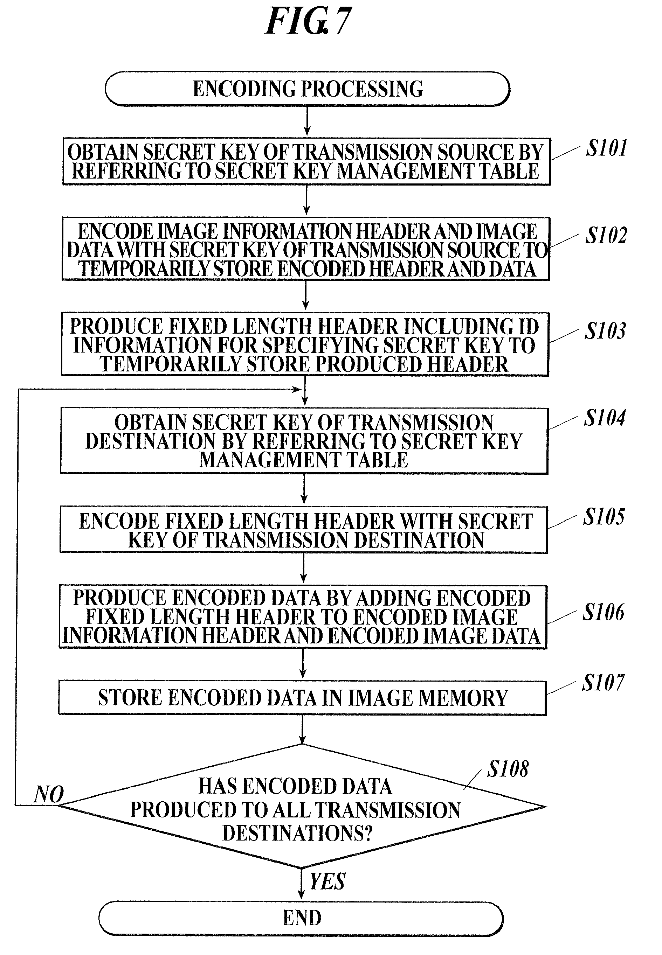

The encoding processing executed in the encoding unit 20 at Step S9 is shown in FIG. 7. Here, the encoding processing executed in the encoding unit 20 is minutely described.

First, by referring to the secret key management table 171, the secret key corresponding to the secret key ID of the transmission source, i.e. the secret key ID of the own image forming apparatus 1A, is obtained (Step S101). With the obtained secret key, the image information header and the image data which are stored at the storage destination address are encoded, and are temporarily stored in the encoded image data storage area of the RAM (Step S102). As the encoding algorithm, various kinds of encoding algorithm such as Data Encryption Standard (DES), Fast Data Encipherment Algorithm (FEAL), MISTY and International Data Encryption Algorithm (IDEA) can be used. Subsequently, as the identification information for specifying the secret key of the transmission source, a fixed length header of a plaintext including the ID information of the secret key is produced, and is temporarily stored in the fixed length header storage area of the RAM (Step S103).

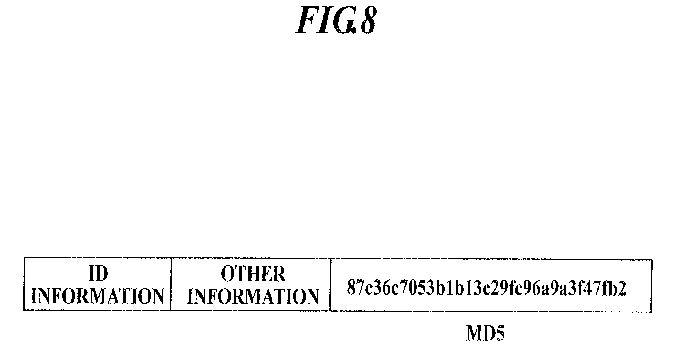

As long as the fixed length header is the secret key ID of the transmission source itself or includes identification information capable of uniquely specifying the secret key ID, the fixed length header may include any pieces of the other data. For example, as shown in FIG. 8, producing a message digest (MD) 5 of image data and giving the MD 5 data to the fixed length header would enable the alteration check of data by comparing the MD 5 data of the image data decoded at the time of decoding with the MD 5 data included in the fixed length header.

Subsequently, the secret key management table 171 is referred to, and the secret key corresponding to the secret key ID of the transmission destination (hereupon the secret key ID of the image forming apparatus 1A, 1B or 1C) is obtained (Step S104). Then, the fixed length header stored in the fixed length header storage area is read to be encoded by the secret key of the transmission destination obtained at Step S104 (Step S105). Then, the fixed length header encoded by the secret key of the transmission destination is added to the image data stored in the encoded image data storage area to produce header-added encoded data (hereinafter simply referred to encoded data) (Step S106), and the encoded data is stored in the image memory in the state capable of specifying the data transmission destination (Step S107).

In the case where there is a transmission destination for which the encoded data is not produced yet (including the own image forming apparatus 1A here) (Step S108; NO), the processing returns to Step S104, and the processing of Steps S104-S107 is performed for the next transmission destination. When the production of the encoded data for all of the transmission destinations has been completed after the processing has been repeatedly executed (S108; YES), the present processing ends.

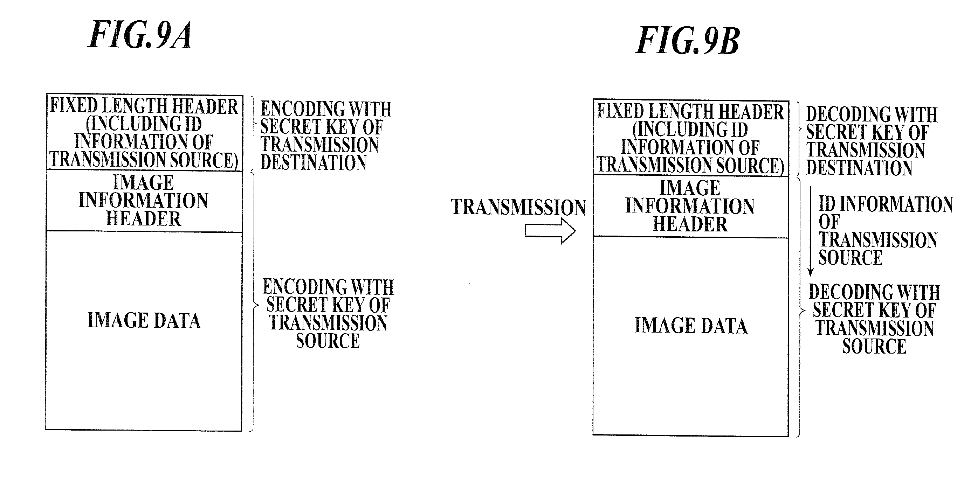

FIG. 9A is a diagram schematically showing the encoding of image data by the encoding processing described above. As shown in FIG. 9A, in the encoding processing described above, the image information header and the image data are encoded with the secret key of the transmission source, and only the fixed length header is encoded with the secret key of a transmission destination.

Because the transmission destinations are the image forming apparatus 1B and 1C in the present embodiment, the encoding unit 20 must produce the encoded data capable of being decoded only by the secret key of the image forming apparatus 1B and the encoded data capable of being decoded only by the secret key of the image forming apparatus 1C. Moreover, it is preferable that the image data stored in the image memory in the image forming apparatus 1A is stored in the state of being encoded for security and is decoded at the timing of being printed to be output. Accordingly, it is preferable to produce both the encoded data capable of being decoded only by the secret key of the image forming apparatus 1A and the encoded data capable of being decoded by the secret key of the data transmission destination. However, in the conventional encoding communication using a secret key, the data to be transmitted is encoded with the secret key of the transmission destination and the like. Consequently, in the case where a plurality of transmission destinations exist, image data (including an image information header) of a large data amount must be encoded a plurality of times with the secret key being changed, which takes a lot of time.

In the encoding processing of FIG. 7, because all pieces of the image header information and the image data can be encoded with the same secret key independently of the transmission destinations as shown in FIG. 9A, it becomes possible to speed up encoding processing in case of transmitting image data to a plurality of transmission destinations as the case of performing a tandem print operation in the image forming apparatus 1. Moreover, because the secret key is jointly owned by means of the secret key management table 171, it becomes possible to rapidly perform processing without exchanging the secret key with the transmission destination each time.

After the encoding processing, the data encoded with the secret key which is not the secret key of the own image forming apparatus 1A stored in the image memory is read, and the read encoded data is transmitted to the image forming apparatus 1 of the corresponding transmission destinations through the non-encoded communication path by the first communication I/F 191 of the communication control unit 19 (FIG. 4: Step S10). In concrete terms, after the encoding processing, encoding completion notification is output from the encoding task to the job task (FIG. 5: T7). A transmission request of the encoded data and a storage destination address of the encoded data are output from the job task to the tandem task (FIG. 5: T8). By the control of the tandem task, the encoded data is transmitted to the image forming apparatus 1 of the transmission destination corresponding to the encoded data through the first communication I/F 191 of the communication control unit 19 (FIG. 5: T9). After the transmission of the encoded data, transmission completion notification is output from the tandem task to the job task (FIG. 5: T10).

After the completion of the transmission of the encoded data to the child machines, in the image forming apparatus 1A, the decoding unit 21 performs the decoding processing of the encoded data stored in the image memory (Step S11). In concrete terms, when the transmission completion notification is input from the tandem task, the job data and the storage destination address of the encoded data are output from the job task to the print task (FIG. 5: T11), and the storage destination address of the encoded data is output from the print task to the decoding task (FIG. 5: T12). The decoding task performs the decoding processing of the encoded data stored in the input storage destination address (FIG. 5: T13). The decoding task is a processing unit of the decoding unit 21.

On the other hand, in the image forming apparatus 1B and 1C of the child machines, the encoded data from the parent machine is severally received to be stored in the image memories (Steps S14 and S18). The encoded data stored in the image memories is performed decoding processing (Steps S15 and S19). In concrete terms, the received job data is input into the job task (FIG. 6: T103). The storage destination address of the encoded data in the image memory of the image memory unit 15 is determined by the job task (FIG. 6: T104). The determined storage destination address and the job data are output to the print task (FIG. 6: T105). Furthermore, when the storage destination address is output from the print task to the decoding task (FIG. 6: T106), the decoding processing of the encoded data stored in the storage destination address is executed by the decoding task (FIG. 6: T107).

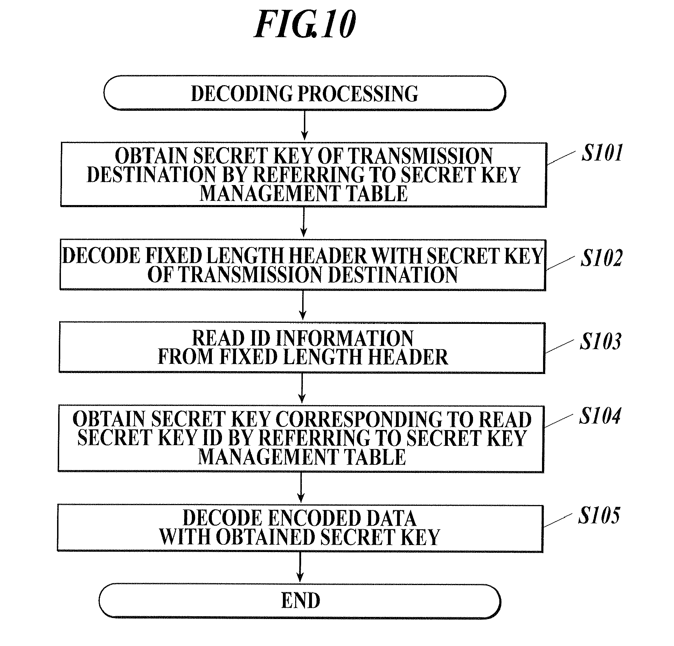

The decoding processing executed in each of the image forming apparatus 1A, 1B and 1C at Step S11, S15 and S19, respectively, is shown in FIG. 10. Here, the decoding processing executed in the decoding unit 21 is described in detail.

First, the secret key management table 171 is referred to, and the secret key of the data transmission destination, i.e. the secret key of own image forming apparatus, is obtained (Step S201). The fixed length header of encoded data is decoded with the obtained secret key (Step S202). When the fixed length header is changed to a plaintext, the secret key ID is read from the fixed length header converted to the plaintext (Step S203). Then, the secret key management table 171 is referred to, and the secret key corresponding to the read secret key ID is specified and obtained as the secret key used for decoding (Step S204). The image information header and the image data of the encoded data are decoded with the obtained secret key (Step 5205).

FIG. 9B is a diagram schematically showing the decoding of the encoded data by the decoding processing described above. As shown in FIG. 9B, because the fixed length header is encoded with the secret key of the image forming apparatus which performs the decoding, it becomes unnecessary to deliver the secret key ID for decoding from the print task to the decoding task at T12 in FIG. 5 and at T106 in FIG. 6. Moreover, because it becomes possible to decode encoded data in the same control procedure both in the child machines and in the parent machine, the control relative to the decoding becomes simple.

The image data having received the decoding processing in the image forming apparatus 1A of the parent machine receives the expanding processing of the compressing expanding IC of the image memory unit 15 (Step S12). Then, an image is formed on a sheet of transfer paper in the image output unit 16 based on the image data having received the expanding processing, and the print outputting of the formed image is performed (Step S13). In concrete terms, after the decoding processing, decoding completion notification is output from the decoding task to the print task (FIG. 5: T14). Then, the image is formed on the sheet of transfer paper in the image output unit 16 based on the image data expanded in conformity with the control of the print task. Thus, print outputting is performed (FIG. 5: T15). After the execution of print, print completion notification is output from the print task to the job task (FIG. 5: T16).

On the other hand, in each of the image forming apparatus 1B and 1C of child machines, the image data having received the decoding processing similarly receives expanding processing by the compressing expanding IC of the image memory unit 15 (FIG. 4: Steps S16 and S20). An image is formed on a sheet of transfer paper based on the image data having received the expanding processing in the image output unit 16, and the print outputting is performed (Steps S17 and S21). In concrete terms, after the decoding processing, decoding completion notification is output from the decoding task to the print task (FIG. 6: T108), and an image is formed on the sheet of transfer paper in the image output unit 16 based on the image data expanded in conformity with the control of the print task to be printed out (FIG. 6: T109). After the printing, print completion notification is output from the print task to the job task (FIG. 6: T110). A processing completion response is notified from the job task to the image forming apparatus 1A of the parent machine through the second communication I/F 192 of the communication control unit 19 (FIG. 6: T111).

When the processing completion notification from both the image forming apparatus 1B and 1C of the child machines is received by the image forming apparatus 1A of the parent machine (FIG. 5: T17), processing completion notification is output from the tandem task to the job task (FIG. 5: T18), and the tandem printing operation A ends.

As described above, according to the image forming system 100, the secret key of each image forming apparatus is mutually exchanged through the encoded communication path to be owned jointly among the image forming apparatus performing the tandem printing operation A in advance, and the secret key inherently used by each apparatus is previously stored in the secret key management table 171 in the state of being associated with the secret key ID which comprises the apparatus ID of the apparatus, and by which secret key ID each secret key can be uniquely specified. When image data and the image information header of the image data are encoded in the tandem printing operation A, the parent machine encodes the image data and the image information header with the secret key of the own image forming apparatus, i.e. the secret key of the transmission source, and produces the fixed length header including the information of the own secret key ID (of the transmission source). Then, the parent machine refers to the secret key management table 171 to encode the fixed length header with the secret key of an image forming apparatus 1 of the transmission destination, and transmits the encoded data produced by adding the encoded fixed length header to the encoded image data to the image forming apparatus 1 of the transmission destination.

Consequently, because the secret keys with which image header information and image data, both having large data amounts, are encoded are all the same independently of data transmission destinations, it is sufficient to perform transmission by using the once encoded image information header and image data and by changing only the fixed length header every transmission destination through the non-encoded communication path, and then it becomes possible to considerably shorten the processing time of encoding processing in the case where the same image data is encoded to be transmitted to a plurality of transmission destinations like in case of the tandem printing in comparison with the processing time of the conventional case where the secret key is changed every encoding to each transmission destination. Thus, it becomes possible to speed up encoding processing. Furthermore, because the secret key is jointly owned by means of the secret key management table 171, it becomes possible to perform processing rapidly without exchanging the secret key with a transmission destination each time. Because the exchanges of the secret keys are performed through the encoded communication path, it becomes possible to perform the exchanges of the secret keys safely.

Moreover, because the control procedure until encoded image data is decoded to be printed out is the same in both of the parent machine and the child machines, it becomes unnecessary to change control in case of being used as the parent machine and in case of being used as the child machine. Moreover, in the case where each image forming apparatus decodes a fixed length header with own secret key in each image forming apparatus, the information for specifying the secret key is included in the fixed length header. Consequently, it becomes unnecessary for the print task to deliver the information of the secret key to the decoding task at the time of decoding.

### (Second Embodiment)

Hereinafter, the attached drawings are referred to while a second embodiment of the present invention is described.

Although the secret key used in the first embodiment corresponds to each image forming apparatus 1, in the present embodiment, a secret key for each user of each image forming apparatus 1 can be used.

In the present embodiment, the storage unit 17 has a user authentication information file 172 (not shown). Moreover, the storage unit 17 stores a user registration processing program, a user authentication program and the programs of a parent machine and child machines of a tandem printing operation B.

The operation display unit 12 of each image forming apparatus 1 includes a user registration screen. When a display of the user registration screen is instructed with an operation of the operation display unit 12, user registration processing is executed by the control unit 11 in conformity with the user registration program. A user ID and a password input through the user registration screen are associated with each other to be stored in the user authentication information file 172, and the secret keys corresponding to the user are produced for the number of the image forming apparatus 1 performing the tandem printing operation in conformity with predetermined algorithm. The apparatus ID of each of the image forming apparatus 1 performing the tandem printing operation and the user ID are set as a secret key ID, and the secret key ID and the produced secret keys are associated with each other to be stored in the secret key management table 171. Then, the produced secret key ID's and the secret keys are transmitted in the state of being associated with each other to the other image forming apparatus 1 through the encoded communication path.

Moreover, the operation display unit 12 includes a user setting screen for performing user setting to a job. When a user ID and a password are input from the user setting screen and the execution of a job (including a transition to a tandem printing mode and various kinds of setting such as a number of printing copies) is instructed, the user authentication processing is executed by the control unit 11 in conformity with the user authentication program, and the job is executed in the case where a combination of the input user ID and the input password exists in the user authentication information file 172. In the case where the combination of the user ID and the password does not exist therein, an error message is displayed on the operation display unit 12. Moreover, a save button for instructing saving the image data of the executed job into the HDD 18 is displayed on the user setting screen. When the save button is depressed before an executive instruction of the job, the save flag is turned on when the job data is produced. Herewith, the user becomes possible to save the image data of the job into the HDD 18.

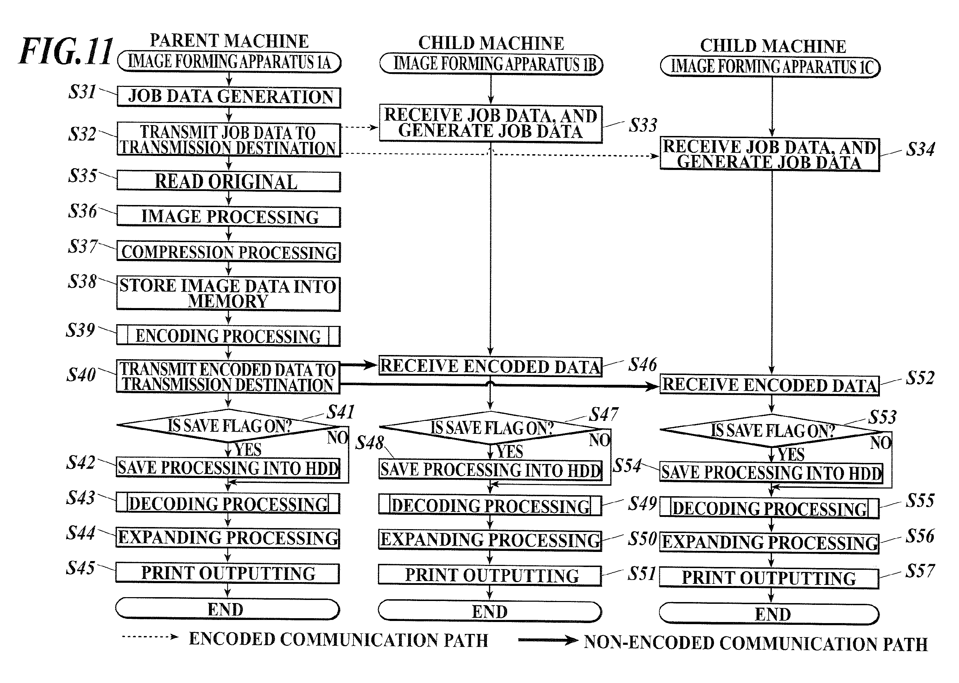

FIG. 11 is a diagram showing the processing sequence of the tandem printing operation B executed after the user authentication. When the user ID and the password have been input, and when the execution of the job in the tandem printing mode has been instructed, and further when the user ID and the password have been authenticated, then the image forming apparatus 1 set as the parent machine in the present embodiment executes the processing in conformity with the sequence showing the tandem printing operation B shown in FIG. 11. In the case where the execution of a job is instructed without the input of the user ID and the password, the image forming apparatus 1 executes the processing in conformity with the tandem printing operation A described with reference to FIG. 4.

Hereinafter, FIG. 11 is referred to while the tandem printing operation B is described. Incidentally, also in the present embodiment, descriptions are given on the supposition that the image forming apparatus 1A is set as the parent machine, and that the image forming apparatus 1B and 1C are set as the child machines. Incidentally, because the data input and output among tasks in the tandem printing operation B are almost the same as those described with reference to FIGS. 5 and 6, only differences are described.

First, in the image forming apparatus 1A, job data is generated based on an input from the operation display unit 12 (FIG. 11: Step S31). The job data is data comprising a job ID for identifying a job, the number of printing sheets, the setting of various operations, storage places of image data, and the like. Moreover, the job data includes the user ID and the ON/OFF of the save flag.

When the job data is generated in the image forming apparatus 1A, the generated job data is transmitted from the second communication I/F 192 of the communication control unit 19 to the image forming apparatus 1B and 1C through the communication path N2, which is the encoded communication path (FIG. 11: Step S32).

In the image forming apparatus 1B and 1C, when the job data from the image forming apparatus 1A is received through the second communication I/F 192 of the communication control unit 19, job data in their own image forming apparatus is generated based on the received job data (FIG. 11: Steps. S33 and S34).

On the other hand, in the image forming apparatus 1A, the image reading unit 13 reads the image of an original to obtain image data (FIG. 11: Step S35), and the image processing unit 14 performs various kinds of image processing to the obtained image data (FIG. 11: Step S36). The image data having received the image processing receives the compressing processing by the compressing expanding IC of the image memory unit 15 (FIG. 11: Step S37), and is stored in the image memory (FIG. 11: Step S38).

When the image data is stored in the image memory, the encoding unit 20 performs the encoding processing of the image data in the image memory (FIG. 11: Step S39). Here, at T5 in FIG. 5, the job data is output from the job task to the encoding task together with the storage destination address and the transmission destination information (hereupon, the apparatus ID's of the image forming apparatus 1B and 1C) of the image data. Because the job data includes the user ID, it becomes possible to specify the secret key used for encoding in the encoding task.

Here, in the case where a user ID is input at the time of the execution of the job, the encoding processing is executed on the setting in which the apparatus ID of the transmission source and the input user ID are used as the secret key ID of the transmission source, and in which the apparatus ID's of the transmission destinations and the input user ID's are used as the secret key ID's of the transmission destinations. The encoding processing is the same as that described with reference to FIG. 7.

After the encoding processing, the data encoded with the secret key other than the input secret key corresponding to the user of the own image forming apparatus 1A stored in the image memory (i.e. the apparatus ID of the image forming apparatus 1A and the user ID) is read, and the read encoded data is transmitted to the apparatus of the transmission destinations corresponding to the secret keys through the communication path N1, which is the non-encoded communication path, by the second communication I/F 192 of the communication control unit 19 (Step S40).

After the completion of the transmissions of the encoded data to the child machines, in the image forming apparatus 1A, it is discriminated whether the save flag of the job data is ON or not. When the save flag is ON (Step S41; YES), the encoded data is saved in the HDD 18 (Step S42).

Successively, in the image forming apparatus 1A, the decoding unit 21 performs the decoding processing of the encoded data stored in the image memory (Step S43). Here, at T11 in FIG. 5, the storage destination address of the encoded data and the job data are output from the job task to the print task, and at T12 in FIG. 5, the storage destination address of the encoded data and the job data are output from the print task to the decoding task. The decoding processing is almost the same as that described with reference to FIG. 10. But, at Steps S201 and S202, the fixed length header is decoded by means of the secret key corresponding to the secret key ID of the own apparatus ID and the user ID included in the job data.

On the other hand, in the image forming apparatus 1B and 1C of the child machines, the encoded data from the parent machine is severally received to be stored in the image memories (Steps S46 and S52). When the save flag included in the job data is ON (Step S47; YES, and Step S53; YES), the received encoded data is saved in the HDD 18 (Step S48 and S54). Then, the encoded data stored in the image memories receives decoding processing (Steps S49 and S55). Here, at T105 in FIG. 6, the storage destination address of the encoded data and the job data are output from the job task to the print task, and at T106 in FIG. 6, the storage destination address of the encoded data and the job data is output from the print task to the decoding task. The decoding processing is almost the same as that described with reference to FIG. 10. But, at Steps S201 and S202, the fixed length header is decoded with the secret key corresponding to the secret key ID of the own apparatus ID and the user ID included in the job data.

The image data having received the decoding processing in the image forming apparatus 1A of the parent machine receives the expanding processing of the compressing expanding IC of the image memory unit 15 (Step S44). Then, an image is formed on a sheet of transfer paper in the image output unit 16 based on the image data having received the expanding processing, and the print outputting of the formed image is performed (Step S45).

On the other hand, in each of the image forming apparatus 1B and 1C of the child machines, the image data having received the decoding processing similarly receives the expanding processing by the compressing expanding IC in the image memory unit 15 (Steps S50 and S56). An image is formed on a sheet of transfer paper based on the image data having received the expanding processing in the image output unit 16, and the print outputting is performed (Steps S51 and S57).

When the processing completion notification from both the image forming apparatus 1B and 1C of the child machines is received by the image forming apparatus 1A of the parent machine (FIG. 5: T17), the tandem printing operation B ends.

Incidentally, the operation display unit 12 includes a user deletion screen. When a user ID and a password are input and user deletion is instructed through the user deletion screen, the user ID and the password are deleted from the user authentication information file 172. Furthermore, the secret key corresponding to the secret key ID including the user ID is deleted from the secret key management table 171, and a deletion instruction of the secret key corresponding to the secret key ID including the user ID from the secret key management table 171 is transmitted to the other image forming apparatus 1. In each of the image forming apparatus 1 having received the deletion instruction, the secret key corresponding to the secret key ID including the user ID is deleted from the secret key management table 171.

The deletion of the secret key from the secret key management table 171 makes it impossible to decode the image data encoded with the secret key. That is, even if the image data remains in the HDD 18 or the image memory, the deletion of the secret key from the secret key management table 172 makes it impossible to decode the image data, and consequently the management of the image data saved in the HDD 18 or the image memory becomes easy. For example, in the case where a person becomes not a user of the image forming system 100, only the deletion of the user registration of the person for deleting the user registration from the table of the secret keys would remove the possibility of the access of the own image data remaining in the image forming apparatus 1 by others without performing the work of deleting the image data.

As described above, according to the image forming system 100, when user ID registration is performed in one of the image forming apparatus 1, a secret key ID combining the apparatus ID of each image forming apparatus performing the tandem printing operation and the user ID, and a secret key are associated with each other to be stored in the secret key management table 172, and the secret key ID and the secret key are transmitted to each of the image forming apparatus performing the tandem printing operation through the encoded communication path to make the secret key be owned jointly. In the case where a user ID and a password are set and the job execution of the tandem printing operation is instructed, the parent machine encodes image data and the image information header thereof with a secret key corresponding to a secret key ID comprising the apparatus ID of the own image forming apparatus and the user ID, and produce a fixed length header including the information of the secret key ID comprising the apparatus ID of the own image forming apparatus and the user ID. Then the parent machine encodes the fixed length header with the secret key corresponding to the secret key ID comprising the apparatus ID of a transmission destination and the user ID, and transits the encoded data produced by adding the encoded fixed length header to the encoded image data to the image forming apparatus 1 of the transmission destination.

Consequently, because the secret keys with which image header information and image data, both having large data amounts, are encoded are all the same independently of data transmission destinations, it is sufficient to perform transmission by using the once encoded image header information and image data and by changing only the fixed length header every transmission destination through the non-encoded communication path, and then it becomes possible to considerably shorten the processing time of encoding processing in the case where the same image data is encoded to be transmitted to a plurality of transmission destinations like in case of tandem printing in comparison with the processing time of the conventional case where the secret key is changed every encoding to each transmission destination. Thus, it becomes possible to speed up encoding processing. Furthermore, because the secret key is jointly owned by means of the secret key management table 171, it becomes possible to perform processing rapidly without exchanging the secret key with a data transmission destination each time. Because the exchanges of the secret keys are performed through the encoded communication path, it becomes possible to perform the exchanges of the secret keys safely.

Moreover, the deletion of a secret key from the secret key management table 171 makes it impossible to decode the image data encoded with the secret key, which image data is saved in an image memory or a HDD. Consequently, the management of the image data saved in the image forming apparatus 1 becomes easy. For example, in the case where a person becomes not a user of the image forming system 100, only the deletion of the user registration of the person for deleting the user registration from the table of the secret keys would remove the possibility of the access to the own image data remaining in the image forming apparatus 1 by others without performing the work of deleting the image data.

According to the embodiments, because each of the secret keys used in the own and other data processing apparatus connected with one another through the communication network is stored by the storage unit in the state of being associated with the identification information for specifying each of the secret keys uniquely, the management of the secret keys becomes easy. For example, by deleting a secret key from the storage unit, the possibility of being accessed to the data encoded with the secret key is removed.

Also, the encoded header-added encoded data can be quickly transmitted and received through the non-encoded communication path, and the secret keys can be safely transmitted and received through the encoded communication path.

Incidentally, the contents of the disclosure of the embodiments described above concerns the suitable examples of the image forming system 100 according to the present invention, and the present invention is not limited to the contents.

For example, in the first and the second embodiments, the secret keys are given to each apparatus and/or each user. However, for example, the secret keys may be given to each group in view of the case where a plurality of persons owns the image data jointly.

Moreover, in the embodiments described above, the case where the encoding processing and the decoding processing according to the present invention are applied to the image forming system has been exemplified to be described, but it is possible to apply the encoding processing and the decoding processing also to the transmission and the reception of data between the image forming apparatus and another apparatus such as a PC, or between the other apparatus such as fellow PC's.

Moreover, in the embodiments described above, the secret key management table 171 is described to be possessed by each image forming apparatus, but a configuration in which a server is provided on the communication path N2 to manage the secret key management table 171 by the serve in a lump and a secret key ID is delivered from each image forming apparatus 1 to the server at the time of encoding and decoding to obtain the secret key may be adopted.

Moreover, the encoding/decoding processing shown in FIGS. 7 and 10 can be applied to the encoding communication in a public key system as well as the encoding communication of the secret key system. For example, in the case where a transmission destination has a plurality of public keys, the data to be transmitted is encoded with any one of the public keys of the transmission destination, and a fixed length header including the information of the public key used for the encoding is produced. The produced fixed length header is encoded with a predetermined public key of the transmission destination, and the encoded fixed length header is transmitted to the transmission destination. The apparatus of the transmission destination receives the encoded fixed length header, and decodes the fixed length header with the secret key corresponding to the predetermined public key. Then, the data to be transmitted is decoded with the secret key corresponding to the public key included in the decoded fixed length header.

In addition, the configurations of details and the operations of details of the image forming system 100 and each apparatus constituting the image forming system 100 can be suitably modified without departing from the sprit and scope of the present invention.

The entire disclosure, including the specification, claims, drawings, and abstract, of Japanese Patent Application No. Tokugan 2005-208433 filed on July 19, 2005 is incorporated herein by reference in its entirety.

## Claims

1. A data transmitting and receiving system comprising:
a plurality of data processing apparatus capable of being connected to one another through a communication network, a key used for at least one of data encoding and data decoding is jointly owned by a transmission source and a transmission destination of the data in the data transmitting and receiving system,
wherein each of the plurality of data processing apparatus includes
an encoding unit to encode data to be transmitted, produce header information including identification information for specifying the key enabling decoding the encoded data, encode the produced header information by using the key of a transmission destination, and add the encoded header information to the data to be transmitted to produce header-added encoded data,
a transmission unit to transmit the header-added encoded data encoded by the encoding unit to a data processing apparatus of the transmission destination through the communication network,
a reception unit to receive the header-added encoded data transmitted from another data processing apparatus through the communication network, and
a decoding unit to decode the header information of the header-added encoded data received from the other data processing apparatus by using a key of a transmission destination in the other data processing apparatus, specify a key to be used for decoding of the received data based on the identification information included in the decoded header information, and decode the received data by using the specified key.

2. The data transmitting and receiving system of claim 1, wherein
the key used for at least one of the data encoding and the data decoding in each of the data processing apparatus is a secret key;
the encoding unit encodes the data to be transmitted by using a secret key of the transmission source, produces the header information including the identification information for specifying the secret key of the transmission source as the identification information, encodes the produced header information by using a secret key of the transmission destination, and adds the encoded header information to the data to be transmitted to produce the header-added encoded data; and
the decoding unit decodes the header information of the header-added encoded data received from the other data processing apparatus with a secret key of the transmission destination in the other data processing apparatus, specifies a secret key to be used for the decoding of the received data based on the identification information for specifying the secret key of the transmission source included in the decoded header information, and decodes the received data by using the specified secret key.

3. The data transmitting and receiving system of claim 2, wherein each of the data processing apparatus is provided with a storage unit to store each of the secret keys used among the plurality of data processing apparatus in a state of being associated with the identification information for specifying the secret key uniquely.

4. The data transmitting and receiving system of claim 2 or 3, wherein the communication network includes an encoded communication path and a non-encoded communication path, performs a transmission and a reception of the header-added encoded data through the non-encoded communication path, and performs the transmission and the reception of the secret key through the encoded communication path.

5. The data transmitting and receiving system of any one of claims 1-4, wherein the plurality of data processing apparatus are image forming apparatus each equipped with a tandem printing function of transferring image data to another image forming apparatus and of sharing a printing job so that the plurality of image forming apparatus perform the print job.

6. The data transmitting and receiving system of claim 5, wherein each of the plurality of image forming apparatus transmits the header-added image data encoded by the encoding unit to the other image forming apparatus by the transmission unit if executing the tandem printing function.

7. The data transmitting and receiving system of any one of claims 2-6, wherein the secret key is inherently provided to each of the plurality of data processing apparatus.

8. The data transmitting and receiving system of any one of claims 2-6, wherein the secret key is inherently provided to each user of each of the plurality of data processing apparatus.

9. The data transmitting and receiving system of any one of claims 1-8, wherein the encoding unit produces a fixed length header including the identification information for specifying the key enabling the decoding of the encoded data to be transmitted, encodes the produced fixed length header by using the key of the transmission destination, and adds the encoded fixed length header to the data to be transmitted to produce the header-added encoded data.

10. A data processing apparatus, comprising:
an encoding unit to encode data to be transmitted, produce header information including identification information for specifying a key enabling decoding the encoded data, encode the produced header information by using a key of a transmission destination, and add the encoded header information to the data to be transmitted to produce header-added encoded data; and
a transmission unit to transmit the header-added encoded data encoded by the encoding unit to a data processing apparatus of a transmission destination through a communication network.

11. The data processing apparatus of claim 10, wherein the encoding unit encodes the data to be transmitted by using a secret key of a transmission source, produces the header information including identification information for specifying the secret key of the transmission source as the identification information, encodes the produced header information by using a secret key of the transmission destination, and adding the encoded header information to the data to be transmitted to produce the header-added encoded data.

12. The data processing apparatus of claim 11, further comprising a storage unit to store each of the secret keys used among own and other data processing apparatus connected to one another through the communication network in a state of being associated with the identification information for uniquely specifying the secret key.

13. The data processing apparatus of claim 11 or 12, wherein the secret key is provided inherently to each of the own and other data processing apparatus connected to one another through the communication network.

14. The data processing apparatus of claim 11 or 12, wherein the secret key is provided inherently to each user of each of the own and other data processing apparatus connected to one another through the communication network.

15. The data processing apparatus of any one of claims 10-14, further comprising:
a reception unit to be receive the header-added encoded data transmitted from another data processing apparatus through the communication network; and
a decoding unit to decode the header information of the header-added encoded data received from the other data processing apparatus by using the key of a transmission destination in the other data processing apparatus, specify a key to be used for decoding of the received data based on the identification information included in the decoded header information to decode the received data by using the specified key.

16. The data processing apparatus of claim 15, wherein the decoding unit decodes the header information of the header-added encoded data received from the other data processing apparatus with the secret key of the transmission destination in the other data processing apparatus, specifies a secret key to be used for the decoding of the received data based on the identification information for specifying the secret key of the transmission source included in the decoded header information, and decodes the received data by using the specified secret key.

17. The data processing apparatus of any one of claims 10-16, wherein the data processing apparatus is an image forming apparatus equipped with a tandem printing function of transferring image data to another image forming apparatus connected with each other through the communication network, or of receiving the image data from the other image forming apparatus, to share a printing job with the other image forming apparatus.

18. The data processing apparatus of claim 17, wherein the data processing apparatus transmits the header-added image data encoded by the encoding unit to the other image forming apparatus by the transmission unit if executing the tandem printing function.

19. The data processing unit of any one of claims 10-18, wherein the encoding unit produces a fixed length header including the identification information for specifying the key enabling the decoding of the encoded data to be transmitted, encodes the produced fixed length header by using the key of the transmission destination, and adds the encoded fixed length header to the data to be transmitted to produce the header-added encoded data.

20. A data processing apparatus, comprising:
a reception unit to receive header-added encoded data transmitted from another data processing apparatus through a communication network; and
a decoding unit to decode header information of the header-added encoded data received from the other data processing apparatus by using a key of a transmission destination in the other data processing apparatus, specify a key to be used for the decoding of the received data based on identification information included in the decoded header information, and decode the received data by using the specified key.

21. The data processing apparatus of claim 20, wherein the decoding unit decodes the header information of the header-added encoded data received from the other data processing apparatus with a secret key of the transmission destination in the other data processing apparatus, specifies a secret key to be used for the decoding of the received data based on the identification information for specifying the secret key of a transmission source included in the decoded header information, and decodes the received data by using the specified secret key.

22. The data processing apparatus of claim 21, further comprising a storage unit to store each of the secret keys used among own and other data processing apparatus connected to one another through the communication network in a state of being associated with the identification information for uniquely specifying the secret key.

23. The data processing apparatus of claim 21 or 22, wherein the secret key is provided inherently to each of the own and other data processing apparatus connected to one anther through the communication network.

24. The data processing apparatus of claim 21 or 22, wherein the secret key is provided inherently to each user of each of the own and other data processing apparatus connected to one another through the communication network.

25. The data processing apparatus of any one of claims 20-24, wherein the data processing apparatus is an image forming apparatus equipped with a tandem printing function of receiving image data from the other image forming apparatus connected with each other through the communication network to share a printing job with the other image forming apparatus.

26. An encoding communication method in a data transmitting and receiving system comprising a plurality of data processing apparatus capable of being connected to one another through a communication network, in which a key used for at least one of data encoding and data decoding is jointly owned by a transmission source and a transmission destination of the data, the method comprising the steps of:
in the data processing apparatus of the data transmission source, encoding the data to be transmitted, producing header information including identification information for specifying a key enabling the decoding of the encoded data, encoding the produced header information using a key of a transmission destination, adding the encoded header information to the data to be transmitted to produce header-added encoded data, and transmitting the encoded header-added encoded data to the data processing apparatus of the transmission destination through the communication network; and
in the data transmission apparatus of the transmission destination, receiving header-added encoded data transmitted from another data processing apparatus through the communication network, decoding the header information of the header-added encoded data received from the other data processing apparatus using a key of the transmission destination of the other data processing apparatus, specifying a key to be used for the decoding of the received data based on the identification information included in the decoded header information, and decoding the received data using the specified key.
